**Europäisches Patentamt**

**European Patent Office**

**Office européen des brevets**

(11) Publication number: **0 193 408**
**A1**

## (12) EUROPEAN PATENT APPLICATION

(21) Application number: **86301454.4**

(22) Date of filing: **28.02.86**

(51) Int. Cl.⁴: **F 16 L 55/02**
**G 10 K 11/16**

(30) Priority: **01.03.85 AU 9539/85**

(43) Date of publication of application:
**03.09.86 Bulletin 86/36**

(84) Designated Contracting States:
**DE FR GB IT NL SE**

(71) Applicant: **JAMES HOWDEN AUSTRALIA PTY. LIMITED**
**97-103 Pacific Highway**
**North Sydney N.S.W. 2060(AU)**

(72) Inventor: **Byrne, Kerry Patrick**
**9 Stewart Street**
**Longueville, New South Wales(AU)**

(74) Representative: **Mair, Richard Douglas et al,**
**F.J. Cleveland & Company 40-43 Chancery Lane**
**London WC2A 1JQ(GB)**

(54) Reactive duct silencers.

(57) A splitter (60;81,82) adapted for use in a duct (85) conveying a gas, comprising a plurality of resonators (10;20,21;40,41;61-63;86) in side by side array, the array defining two, substantially parallel faces (22,23;42,43;67-70), each resonator comprising an array of walls (11-15;22-30;42-48;64-70) defining an acoustic cavity (16;34,35;49,50), the only aperture (17;31,36;51,52;87) in each acoustic cavity lying in the plane of a first (11;22,23;42,43;67-70) of the walls and extending along substantially the full length thereof, the aperture being formed between an edge of the first wall and an edge of a second (12;24,26;46,47;64-66) of the walls, which second wall lies in a plane which is transverse to the plane of the first wall, the aperture communicating with a passage (18;32,33;53,54) extending into the cavity and being bounded on one side by the second wall and on an opposite side by an internal baffle (13;25,27;44,45), which baffle lies substantially parallel to the second wall and is connected to the first wall along the said edge thereof bounding the aperture, the said first walls of the resonators forming the said faces of the splitters.

FIG. 4

## REACTIVE DUCT SILENCERS <span>0193408</span>

The present invention relates to reactive duct silencers adapted for use in reducing machine generated or other noise transmitted by gases passing through ducts in which the silencers are formed from a novel arrangement of resonators.

It is known to provide silencers for use in ducts conveying gases in order to suppress or attenuate undesirable sound frequencies. Such silencers are usually of the absorptive type and are formed from porous material. However, it has been found that such silencers have a very limited life when used in harsh environments for example a situation in which the ducts convey hot gas streams with a significant particulate and/or liquid burden. In this case, the particulate matter tends to block the pores of the absorptive material thereby causing a reduction in performance.

In order to overcome this problem, the absorptive material has been wrapped in impervious material to prevent clogging. However, since the impervious material must of necessity be thin, its durability is uncertain. In particular when the gas temperature inside the impervious wrapping changes it may be accompanied by a static pressure change of sufficient magnitude to split the impervious material or collapse the porous material.

Other methods have been used to overcome these difficulties including removing the absorptive material from the gas stream to form a tuned dissipative silencer and using perforated plates in conjunction with absorptive material.

None of the abovementioned methods have been found to be completely satisfactory when used in gas streams containing significant particulate burdens. Furthermore all of the methods require sophisticated chamber shapes which are costly to produce, may suffer from metal fatigue and have a tendency to produce regenerated noise and high pressure losses with flow past the silencer elements due
to the complex shapes required.
Additionally attenuation is difficult to achieve at
frequencies below 250 Hz.

The present invention seeks to provide a silencer
that is able to achieve performance for a satisfactory
period of time under conditions in which hot gas streams
having significant particulate burdens are conveyed
through ducts.

This is achieved through the use of a resonator of
the Helmholtz type, in which the resonator comprises an
arrangement of walls defining an acoustic cavity and an
opening in a first wall, the opening giving entry to a
passage extending into the resonator the said passage
being defined by the inner surface of a second wall which
wall is spaced apart from the first wall by the opening
and an inner wall which is substantially parallel to the
second wall and connected to the first wall at the
opening, the resonator being arranged so that the
direction of flow of the gas is parallel to the plane of
the first wall.

In British Patent Application 1,594,382 (Hoch et al)
there is disclosed a sound attentuation apparatus in which
a plurality of resonators are provided for use in reaction
engines such as gas turbines, wherein the resonators are
positioned against the wall of a gas carrying duct. The
resonators are of the Helmholtz type and are of a similar
configuration to that described above. It is to be noted,
as would be expected, from its intended use, the entry or
throat for each of the resonators lie flush with the inner
surface thereof, which surface carries the gas flow.

In US Patent 4,231,447 (Chapman), there is further
disclosed an arrangement of Helmholtz resonators,
generally of the aforementioned type, in which the entry
into each of the resonator compartments is by a neck, the end of which has been biased in a manner such that the end lies in a plane extending at an acute angle with the body of the neck. The invention claims that the advantage of such an arrangement is that it broadens the frequency response of the resonators. Again, as in the aforementioned disclosure, the entry to each of the resonator compartments lie on the same surface along which the gas flows.

A further arrangement of Helmholtz resonators generally of the aforementioned type is disclosed in GB2,024,380 (Chapman). The resonators disclosed therein are formed into an acoustic lining which may be used in the intake or exhaust ducts of gas turbine aeroengines. As in GB1,594,382, the entry to each of the resonator compartments lie on the same surface along which the gas flows.

The present invention consists in a splitter adapted for use in a duct conveying a gas, comprising a plurality of resonators in side by side array, the array defining two, substantially parallel faces, each resonator comprising an array of walls defining an acoustic cavity, the only aperture in each acoustic cavity lying in the plane of a first of the walls and extending along substantially the full length thereof, the aperture being formed between an edge of the first wall and an edge of a second of the walls, which second wall lies in a plane which is transverse to the plane of the first wall, the aperture communicating with a passage extending into the cavity and being bounded on one side by the second wall and on an opposite side by an internal baffle, which baffle lies substantially parallel to the second wall and is connected to the first wall along the said edge thereof bounding the aperture, the said first walls of the resonators forming the said faces of the splitters.

As used in this specification, a splitter means an arrangement of connected resonators which function to divide the gas flow, whereby individual resonators are combined in such a way that the overall performance of the combination is substantially the sum of the performance of the individual resonators.

The advantage of such an arrangement of resonators in a splitter is that it may be placed within a duct in a manner such that gas is permitted to flow over apertures lying in both faces, thereby producing an increased degree of attenuation at the natural frequency of each of the resonators.

It is also possible that the dimensions of each of the resonators may be varied in order to provide attenuation at two different frequencies.

It is preferred that resonators according to the invention are formed by bending sheet steel, the gauge of which is chosen so that the walls remain substantially rigid during operation. However, other materials and methods may be used to form the resonators provided that the resonators are sufficiently rigid and durable in operation.

To achieve a suitable degree of attenuation and to produce resonance at the desired frequencies the dimensions of the resonators may be varied.

By varying the length of the baffle of a resonator, the resonant frequency will be varied.

The dimension of the aperture may also be varied; decreasing the width of the aperture lowering the resonant frequency. Preferably the width of the aperture is not less than about 10 mm. However, the minimum dimension will be largely determined by the properties and the quantity of the particles present in the gas stream. In the majority of situations the dimension lies between 20 and 30 mm.

The depth of the resonator defined by the length of the second wall may also be varied. Preferably, the
length of the second wall is between 50 and 500 mm. In a
particularly preferred embodiment the length is 250 mm.

The width of the resonator defined by the length of
the first wall may also be varied. Preferably the width
of the resonator is between 50 and 500 mm. In a
particularly preferred embodiment it is 100 mm.

In any particular use situations, the dimensions of
the resonators may be selected to maximize performance.
In one embodiment, it has been found advantageous to
provide at least one intermediate wall which effectively
divides each cavity in a splitter into two or more
resonators. This intermediate wall extends longitudinally
within the splitter, orthoganol to and connected with the
first and second walls in a manner such that the length,
as defined by the dimension along the axis of a cavity
transverse to the longitudinal axis of the splitter, is
less than half the wavelength of the resonant frequency of
the resonators.

Although it is well known that Helmholtz resonators
are capable of resonating at a plurality of frequencies,
the degree of attenuation obtained at the frequencies
other than primary frequency is usually not significant.
The prevent inventor has found that the dimensions of a
resonator of the invention may be appropriately selected
to provide significant attenuation at least at two
frequencies, wherein the degree of attenuation at least at
the second frequency is lower than that of the primary
frequency. This is of considerable benefit in that a
separate set of cavities having resonance at the secondary
frequency would not be required.

In order to achieve resonance at a secondary
frequency, at the appropriate attenuation, the dimensions
of a cavity are firstly selected to give the desired
attenuation at the primary frequency. The width of the first wall is then increased until resonance is achieved at the secondary frequency. However, because increasing the first wall width also has the effect of lowering the primary resonant frequency, it is necessary to vary other dimensions such as the width of the apperture and/or the width of the second wall to shift the primary resonant frequency to that desired. Further adjustment to the width of the first wall may then be required together with adjustments to the other dimensions until the desired attenuation at the two frequencies is obtained.

The resonators used to form the splitter may all be of the same dimensions in which case the degree of attenuation achieved at a specific frequency would be increased.

Alternatively, the dimensions of the individual resonators may be varied as hereinbefore described in a manner such that the splitter will produce a degree of attenuation over a range of frequencies.

In a second aspect, the present invention consists in an improvement to a duct adapted to convey a gas capable of carrying noise, the improvement comprising positioning within the duct at least one splitter, said splitter comprising a plurality of resonators in side by side array, the array defining two, substantially parallel faces, each resonator comprising an array of walls defining an acoustic cavity, the only aperture in each acoustic cavity lying in the plane of a first of the walls and extending along substantially the full length thereof, the aperture being formed between an edge of the first wall and an edge of a second of the walls, which second wall lies in a plane which is transverse to the plane of the first wall, the aperture communicating with a passage extending into the cavity and being bounded on one side by the second wall and on an opposite side by an internal baffle, which baffle lies substantially parallel to the second wall and is connected to the first wall along the said edge thereof bounding the aperture, the said first walls of the resonators forming the said faces of the splitters and wherein the gas flows in a direction substantially parallel to said splitter faces.

It will of course be appreciated by a person skilled in the art that a plurality of splitters of the present invention may be used to form a silencer for use in a duct conveying a gas.

In this embodiment of the invention, it is preferred that a number of splitters are formed into a silencer so as to produce the overall desired attenuation at the required frequencies.

By properly selecting the dimensions of the individual resonators and cavities in a splitter, quite broad band attenuation may be achieved. For example, a silencer of the present invention has been produced whereby the attenuation is a minimum of 20dB over the frequency range of 200 Hertz to at least 5000 Hertz.

Although the present invention has particular utility when used in gas streams with particulate burdens, the invention is not so limited to such gases. The present invention may be used in substantially "clean" gases and also gases containing water or other contaminating vapours.

However, when used in situations involving significant particulate burden in the gas stream, the apertures in a splitter may be so arranged as to constitute slits, lying substantially vertical to the direction of gas flow. The advantage of such an arrangement is that a large volume of particles would have to be deposited within individual resonators in order to substantially effect performance.

The splitters may be wholly or partly within the gas stream or affixed to a duct wall provided that the direction of flow of gas is essentially over the apertures of the resonators. In another embodiment of the second aspect of the invention, wherein the gas contains substantial particulate and/or vapor burden, one face of the splitter is positioned against an inner surface of the duct, all of the apertures are formed to lie in the plane of the other face and the apertures are slits lying substantially vertical to the direction of gas flow.

It is also within the scope of this invention to position at least one splitter having apertures in both faces spaced apart from the inner surfaces of the duct and at least one splitter having apertures in one face only positioned against an inner surface in a manner such that all of the apertures are in communication with the gas stream.

It is preferred that the percentage of duct cross-sectional areas which is occupied by the splitters is between 20 and 60%.

Hereinafter described by way of example only are four embodiments of the present invention in which:-

Fig. 1 is a cross-sectional view of a resonator of the prior art;

Fig. 2 is a cross-sectional view of a pair of resonators according to this invention;

Fig. 3 is a cross-sectional view of another pair of resonators;

Fig. 4 is a cross sectional view of a portion of a splitter according to this invention;

Fig. 5 is a graph showing the variation of attenuation with change in frequency for a resonator according to this invention; and

Fig. 6 is a cut-away perspective view of a silencer according to this invention arranged in a duct.

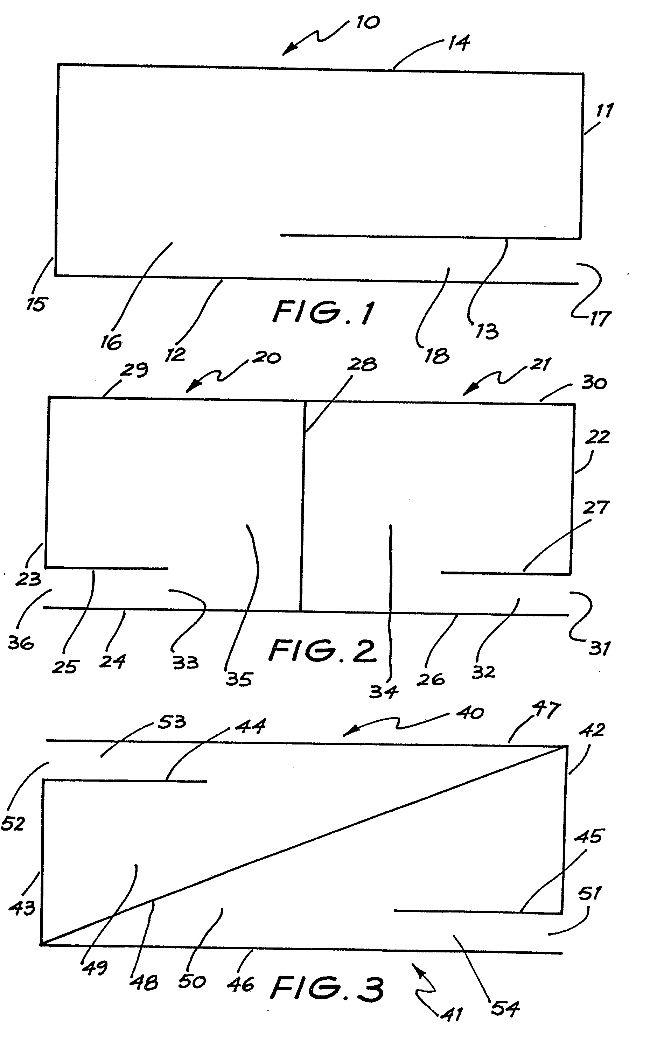

The resonator 10 described with reference to Fig. 1 comprises an array of walls 11, 12, 13, 14, 15 defining an acoustic cavity 16. An opening 17 is in the first wall 11 and is formed into a passage 18 by the second wall 12 and baffle 13.

The pair of resonators 20, 21 described with reference to Fig. 2 each comprises an array of walls 22, 23, 24, 25, 26, 27, 28, 29, 30 defining two acoustic cavities 34, 35. Apertures 31, 36 in the first walls 22, 23 are formed into passages 32, 33 by the second walls 24, 26 and baffles 25, 27. A common wall 28 joins the two resonators 20, 21 and the first walls 22, 23 form parallel faces.

This figure represents the simplest case of a splitter, which would be capable of producing resonance at a single frequency only.

The pair of resonators 40, 41 described with reference to Fig. 3 each comprises an array of walls 42, 43, 44, 45, 46, 47, 48 defining two acoustic cavities 49, 50. Apertures 51, 52 in the first walls 42, 43 are formed into passages 54, 53 by the second walls 46, 47 and baffles 45, 44. A common wall 48 joins the two resonators 40, 41 and the first walls 42, 43 form parallel faces. Again, this represents the simplest case of a splitter.

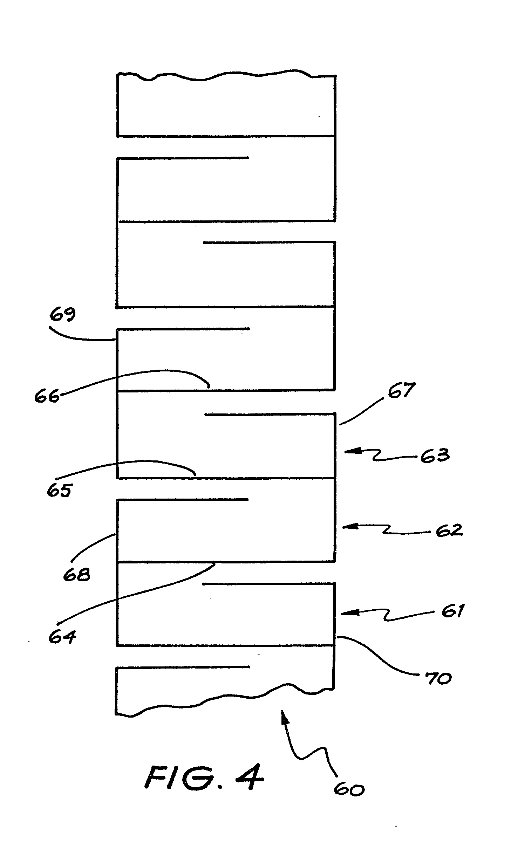

The splitter 60 described with reference to Fig. 4 comprises a plurality of resonators 61, 62, 63 which are connected by a series of common walls 64, 65, 66. The first walls 67, 68, 69, 70 form parallel faces.

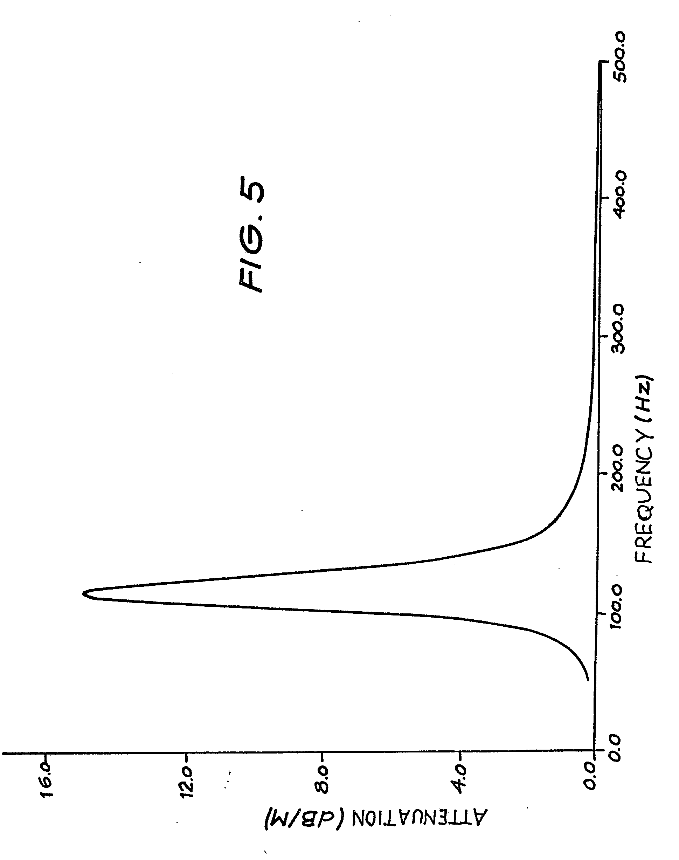

Fig. 5 shows a graph of attentuation versus frequency for a given length of the baffle. Here the length is 225 mm and the normalized resistance of the aperture is one. It can be seen that the degree of attenuation is maximum at a frequency of approximately 100 Hz.

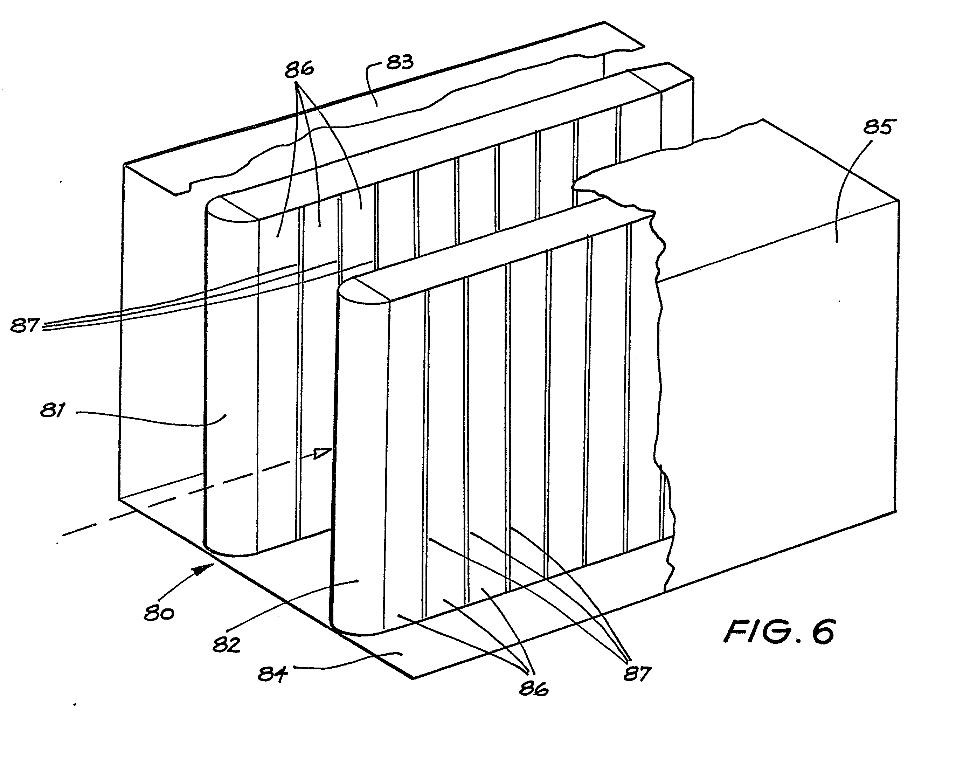

In Fig. 6 a silencer 80, comprises two splitters 81, 82, mounted longitudinally in a duct 85 between the inner surfaces of the upper and lower portions of the duct. The direction of gas flow is as indicated in the figure. Individual resonators 86 are connected by a series of common walls (not shown) in a manner such that all of the apertures 87 lie in the planes of the first walls and the direction of gas flow is over the opening 87.

In this embodiment, the apertures are formed into vertical slits.

0193408

CLAIMS

1.  A splitter adapted for use in a duct conveying a gas, comprising a plurality of resonators in side by side array, the array defining two, substantially parallel faces, each resonator comprising an array of walls defining an acoustic cavity, the only aperture in each acoustic cavity lying in the plane of a first of the walls and extending along substantially the full length thereof, the aperture being formed between an edge of the first wall and an edge of a second of the walls, which second wall lies in a plane which is transverse to the plane of the first wall, the aperture communicating with a passage extending into the cavity and being bounded on one side by the second wall and on an opposite side by an internal baffle, which baffle lies substantially parallel to the second wall and is connected to the first wall along the said edge thereof bounding the aperture, the said first walls of the resonators forming the said faces of the splitters.

2.  In a duct adapted to convey a gas capable of carrying noise, the improvement comprising positioning within the duct at least one splitter, said splitter adapted for use in a duct conveying a gas, comprising a plurality of resonators in side by side array, the array defining two, substantially parallel faces, each resonator comprising an array of walls defining an acoustic cavity, the only aperture in each acoustic cavity lying in the plane of a first of the walls and extending along substantially the full length thereof, the aperture being formed between an edge of the first wall and an edge of a second of the walls, which second wall lies in a plane which is transverse to the plane of the first wall, the aperture communicating with a passage extending into the cavity and being bounded on one side by the second wall and on an opposite side by an internal baffle, which baffle lies substantially parallel to the second wall and is connected to the first wall along the said edge thereof bounding the aperture, the said first walls of the resonators forming the said faces of the splitters and wherein the gas flows in a direction substantially paralel to said splitter faces.

3. A splitter as claimed in claim 1 or the improvement of claim 2, wherein the dimensions of the resonators are selected to produce resonance at least at two frequencies.

4. A splitter as claimed in claim 1 or the improvement of claim 2, wherein the width of the apertures is not less than 10mm.

5. A splitter or the improvement as claimed in claim 4, wherein the width of the apertures lies in the range of from 20 to 30mm.

6. A splitter as claimed in claim 1 or the improvement of claim 2, wherein the length of the second wall lies in the range of from 50 to 500mm.

7. A splitter or the improvement as claimed in claim 6, wherein the length of the second wall is 250mm.

8. A splitter as claimed in claim 1 or the improvement of claim 2, wherein the width of at least two apertures are different, thereby providing resonance at least at two frequencies.

9. A splitter as claimed in claim 1 or the improvement of claim 2, wherein the length of the first wall lies in the range of from 50 to 500mm.

10. A splitter or the improvement as claimed in claim 9 wherein the length of the first wall is 100mm.

11. A splitter as claimed in claim 1 or the improvement of claim 2, wherein the length of at least two first walls is different, thereby providing resonance at least at two frequencies.

12. A splitter as claimed in claim 1 or the improvement of claim 2, wherein the cavities in at least one splitter are each divided into two or more resonators by placing at least one intermediate, longitudinally extending wall in said splitter, which wall is orthogonal to and connected with said first and second walls and wherein the length of the first and second walls in each said resonator is less than half the wavelength of the resonant frequency of the resonators.

13. The improvement as claimed in claim 2 wherein the gas contains substantial particulate and/or vapour burden.

14. The improvement as claimed in claim 13 wherein the apertures are slits lying substantially vertical to the direction of gas flow.

15. The improvement of claim 14, wherein one face of at least one splitter is positioned against an inner surface of the duct and all of the apertures lie in the plane of the other face.

16. The improvement as claimed in claim 2 including a plurality of splitters, each of which is capable of resonance at least at one frequency.

17. The improvement of claim 16 wherein each splitter is capable of resonance at a plurality of frequencies.

18. The improvement as claimed in claim 2 wherein the percentage of cross-sectional area which is occupied by the at least one splitter lies in the range of from 20 to 60%.

19. A splitter as claimed in claim 1 or the improvement of claim 2 wherein the resonators are formed from sheet steel.

*FIG.1*

*FIG.2*

*FIG.3*

FIG. 4

FIG. 5

FIG.6

# 0193408

**EUROPEAN SEARCH REPORT**

Application number

## DOCUMENTS CONSIDERED TO BE RELEVANT

EP 86301454.4

| Category | Citation of document with indication, where appropriate, of relevant passages | Relevant to claim | CLASSIFICATION OF THE APPLICATION (Int. Cl.4) |
|---|---|---|---|
| X | DD - A - 205 808 (VEB TURBOWERKE MEISSEN)<br>* Totality *<br>-- | 1,2,3, 11,12, 13,14, 16 | F 16 L 55/02<br>G 10 K 11/16 |
| X | DD - A4 - 217 398 (VEB TURBOWERKE MEISSEN)<br>* Totality *<br>-- | 1,2,3, 11,12, 13,14, 16 | |
| A | DE - A1 - 3 008 329 (RHEINHOLD & MAHLA GMBH)<br>* Totality *<br>-- | 1 | |
| A | DE - A1 - 2 825 939 (VKI RHEINHOLD & MAHLA AG)<br>* Totality *<br>-- | 1 | |
| A | DE - A1 - 3 322 204 (G+H MONTAGE GMBH)<br>* Totality *<br>---- | 1 | TECHNICAL FIELDS SEARCHED (Int. Cl.4)<br><br>F 16 L 55/00<br>G 10 K 11/00 |

The present search report has been drawn up for all claims

| Place of search | Date of completion of the search | Examiner |
|---|---|---|
| VIENNA | 22-05-1986 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82